# EUROPEAN PATENT APPLICATION

(11) **EP 2 282 252 A1**
(43) Date of publication of application: **09.02.2011**
(21) Application number: 09305726.3
(22) Date of filing: 31.07.2009
(51) Int. Cl.: G06F 3/023

(54) **Method of and apparatus for converting a character sequence input**

(71) Applicant: FRANCE TELECOM, 75015 Paris (FR)
(72) Inventor: Blyth, Steven, London N16 7TY (GB); Chaudhry, Kashif, London SW16 5SR (GB)
(74) Representative: Cabinet Plasseraud

(57) **Abstract**

A method of and a conversion module for converting a character sequence input of text, the character sequence being input by means of an electronic keypad to a terminal operating in a first input interpretation mode, the method comprising: inputting a first character sequence by pressing one or more keys of the keypad according to a key press pattern, the key press pattern comprising one or more key press events for obtaining a character sequence; analysing said key press pattern to determine a second character sequence corresponding to the interpretation of said key press pattern according to a second input interpretation mode different to the first input interpretation mode; and displaying the second character sequence.

## Description

### Field of the Invention

The present invention relates in general to a method and apparatus for converting a character sequence of text input. Particularly but not exclusively, the invention relates to a method of converting a first character sequence input by means of an electronic keypad to a terminal operating in a first input interpretation mode to a second character sequence interpreted according to a second input interpretation mode different to the first input interpretation mode.

### Background of the Invention

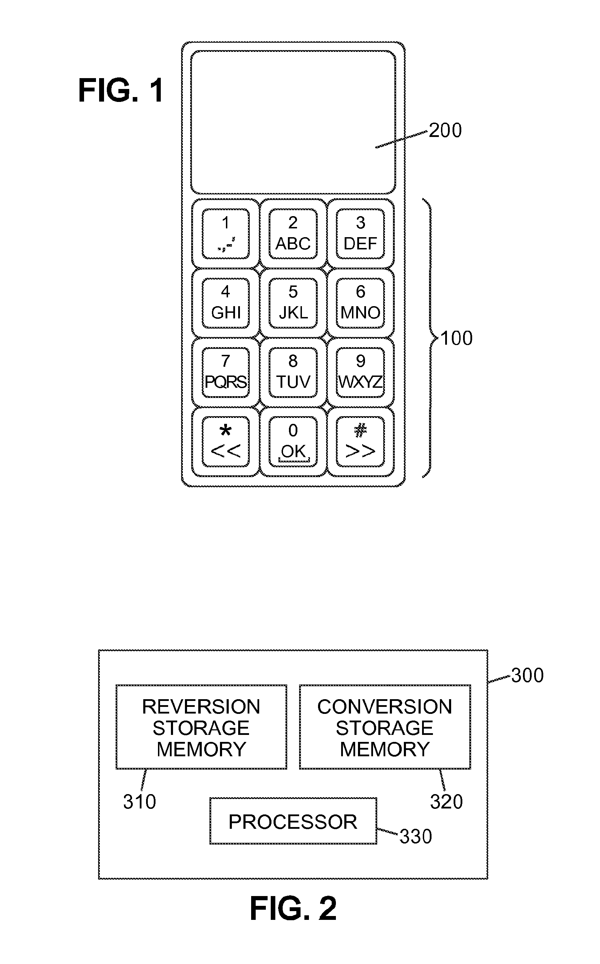

Inputting text to mobile terminals as a means of communication via services such as short message service (SMS), social networking tools such as Twitter^{™} and Facebook^{™}, email applications; or to add notes or update calenders is becoming more and more popular with the advances in mobile terminal technology. Composing a piece of text is typically performed by inputting a sequence of characters by means of a limited size keypad in which each key is typically assigned more than one character. A typical limited size keypad consists of number keys and additional symbol keys with a plurality of the number keys being assigned a plurality of additional characters. An example of such a key pad for the input of numbers, symbols and alphabetic characters is illustrated in Figure 1. The illustrated keypad has 12 keys arranged in 3 columns and 4 rows. The numbers 1 to 9 are assigned in ascending order to the keys of the upper three rows while the symbol *, the number 0 and the symbol # are assigned to the keys of the bottom row. Alphabetic characters A to Z spread over a subset of the keys are in this case multiply assigned to number keys 2 to 9. Further symbols are assigned to key 1. Each key of the keypad is thereby assigned a plurality of characters. The pressing of a key will result in the input of a character according to the input interpretation mode in which the terminal is operating.

A number of input interpretation modes are typically used on mobile terminals having limited size keypads.

A first input interpretation mode is commonly referred to as a multi-tap mode. In this mode a key must be pressed one or more times until the desired number, letter or other character or symbol is displayed. For example, referring to Figure 1, in order to input the word COD the key associated with the letters ABC and the number 2 is pressed three times in quick succession to display C, then the key associated with the letters MNO and the number 6 is pressed three times in succession to display the letter O and finally the key associated with the letters DEF and the number 3 is pressed once to display the letter D. Similarly, in order to input the word MONK the key associated with the letters MON and the number 6 is pressed once to display M, then after waiting for a predetermined time duration often referred to as key timeout, the same key is pressed three times in quick succession to obtain the letter O, and after waiting again for a time out period the same key is pressed twice in succession to obtain the letter N. The key associated with the letters JKL and the number 5 is pressed twice in quick succession to obtain the letter K. The word MONK is thus displayed on the screen of the terminal. The time delay is required when two letters associated with the same key form consecutive letters in the word to be composed, or when the same character has to be input twice in succession. For example in the case of typing the sequence A, if there is no pause between the one click of the key for obtaining A and the two clicks of the key for obtaining B, the key press pattern will be interpreted by the terminal as three clicks in succession and C will be displayed instead of AB. In some keypad models instead of waiting for a certain time period between entering characters assigned to the same key, a particular key may be pressed so that the second character from the same key can be input. In this way the dedicated time out key indicates that the required number of clicks of the key have been performed for obtaining the desired character, the pressing of this timeout key being equivalent to the expiry of a timeout period.

A second input interpretation mode is commonly referred to as a predictive text input. In this mode a user composes a word by pressing the key to which the desired letter is associated only once and the predictive text input predicts a word corresponding to the combination of consecutive key presses. The possible letter combinations are checked with a word database. Since each key is associated with at least three letters there can be several combinations which provide a real word. The prediction of the intended text input is based on the probability by which a certain key input sequence corresponds to a certain word. Examples of predictive interpretation models include T9, eZitext and ITAP predictive text models. For example pressing the key associated with the number 4 - GHI once, followed by the key associated with the number 2- ABC and finally the key associated with the number 3-DEF offers in an English language predictive mode the words "HAD" or "ICE". If the first suggested word is not the right one e.g. HAD is displayed on the screen the user may click on an allocated key of the keyboard to see another word suggestion which in this case is the word "ICE".

A third interpretation mode is number input mode in which one or more digits are input from the keypad. In this case the key corresponding to the desired number is pressed once in order to display the number. For example to display the number sequence 4567, the key corresponding to the number 4 is pressed once, then the key corresponding to the number 5 is pressed once, the key corresponding to the number 6 is pressed once, and finally the key corresponding to the number 7 is pressed once.

Other input methods include gesture based character input methods such as for example writing a character on a touch sensitive screen of a terminal with a stylus or finger.

The manipulation required for changing from one operating mode to the other depends on the model of the mobile terminal. For example in some mobile terminals pressing or holding the * key, or any other such dedicated key, when the terminal is in message composition mode will enable the input interpretation mode to be changed. The key is sometimes referred as a conversion key and will depend on the mobile of keypad.

Many users of mobile terminals compose a text input for text messages or for status updates, for example, without looking at the screen until a portion or the entire text input has been typed. In some cases the user may start typing text believing the keypad to be operating in the predictive interpretation mode but in reality the keypad is operating in the multitap mode. For example thinking he is in the predictive text mode he uses a sequence of key presses to display the intended text input "Hey there how are you doing". However, instead of "Hey there how are you doing" the character sequence displayed is "Gdw tgdpd gmw apd wmt dmgmg" since this sequence corresponds to the interpretation of the key presses according to the multitap interpretation mode instead of the interpretation of the same key presses according to the predictive interpretation mode. The user realises that he had not typed out what he has intended to and then needs to delete the text, change the input interpretation mode and type the text out again, which is both time consuming and frustrating.

### Summary of the Invention

Accordingly, to address one or more of the foregoing concerns, a first aspect of the invention provides a method of converting a character sequence input of text , the character sequence being input by means of a keypad to a terminal operating in a first input interpretation mode, the method comprising: inputting a first character sequence by pressing one or more keys of the keypad according to a key press pattern, the key press pattern comprising one or more key press events for obtaining a character sequence; processing said key press pattern to determine a second character sequence corresponding to the interpretation of said key press pattern according to a second input interpretation mode different to the first input interpretation mode; and displaying the second character sequence.

A second aspect of the invention provides a conversion module for converting a character sequence input of text , the character sequence being input by means of a keypad to a terminal operating in a first input interpretation mode, the module comprising: a memory for storing a key press pattern, the key press pattern comprising one or more key press events for inputting a character sequence via the keypad; a processor for analysing said key press pattern to determine a second character sequence corresponding to the interpretation of said key press pattern according to a second input interpretation mode different to the first input interpretation mode.

A third aspect of the invention provides a terminal comprising a keypad for inputting a character sequence; a conversion module, according to embodiments of the invention, for converting a character sequence input of text and a display for displaying a converted character sequence.

Accordingly, when a terminal is operating in an input interpretation mode different to the input interpretation mode assumed by the user to be in operation a text input by the user in the operating interpretation mode may be converted to the desired character sequence by converting the character sequence without the need to delete and retype the entire text input.

In embodiments of the invention one or more of the following features may be included in the method or conversion module:
■ the first input interpretation mode may be selected from the following group: number input mode, multitap input mode, gesture based input mode and predictive input mode, the second input mode being different to the first input mode and selected from the following group: number input mode, multitap input mode, gesture based input mode and predictive input mode;
■ analysing the key press pattern may include identifying a key pressed and storing the character corresponding to the key pressed according to the second input interpretation mode - for example the number corresponding to the key pressed may be stored;
■ analysing the key press pattern may include determining the number of times the same key has been pressed consecutively and determining the character corresponding to the number of consecutive key presses of the same key according to a multitap interpretation mode.
■ analysing the key press pattern may include determining if a key pressed is different to an immediately preceding key pressed, and if it is determined that the key pressed is different to the immediately preceding key pressed, storing a character corresponding to the number of consecutive presses of the preceding key according to a multi-tap interpretation mode;
■ analysing the key press pattern may include determining if a predetermined time delay has expired, or if a key indicating a timeout has expired is pressed, between two consecutive press events in which the same key is pressed more than once.
■ if it is determined that a predetermined time delay has expired or a time out key has been pressed between two consecutive press events in which the same key is pressed twice, a character corresponding to the number of presses of the said same key, before expiration of the predetermined time delay or before pressing of the time out key and according to a multitap interpretation input mode, may be stored.
■ the method may further include or the conversion module may be further configured for identifying and storing the sequence of keys pressed forming an input character sequence, splitting the input character sequence into one or more word tokens, counting the number of characters in each word token, each character corresponding to a key press, finding words in a predictive word dictionary corresponding to the possible characters forming the word token and to the word length.
■ the method may further include or the conversion module may be further configured for storing each character of the character sequence according to the first input interpretation mode so that the first character sequence may be retrieved.

The methods according to the invention may be computer implemented. The methods may be implemented in software on a programmable apparatus. They may also be implemented solely in hardware or in software, or in a combination thereof.

Since the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

### Brief Description of the Drawings

Embodiments of the invention will now be described, by way of example only, and with reference to the following drawings in which:-
Figure 1 is a schematic diagram of a keypad and screen of a mobile telephone which can be used to implement at least one embodiment of the invention;
Figure 2 is a block diagram illustrating components of an apparatus for converting a character sequence input according to at least one embodiment of the invention;
Figure 3 is a flow chart of a method for converting a character sequence input according to a first embodiment of the invention;
Figure 4 is a flow chart of a method for converting a character sequence input according to a second embodiment of the invention;
Figure 5 is a flow chart of a method for converting a character sequence input according to a third embodiment of the invention;
Figure 6A is a flow chart of a method for converting a character sequence input according to a third embodiment of the invention; and
Figure 6B is a continuation of the flow chart of figure 6A.

### Detailed description

In the embodiments of the invention described hereafter a mobile terminal in the form of a mobile phone is used to send a short text message as a form of communication. Referring to Figure 1 the mobile telephone 1 has a keypad 100 for composing a text input and a screen 200 for displaying a text input. The keypad 100 has 12 keys arranged in 3 columns and 4 rows. The numbers 1 to 9 are assigned in ascending order to the keys of the upper three rows while the symbol *, the number 0 and the symbol # are assigned to the keys of the bottom row. Alphabetic characters A to Z are in this case multiply assigned to number keys 2 to 9. Characters ABC are assigned to key 2 while characters WXYZ are assigned to key 9. Further symbols are assigned to key 1.

Although the keypad shown in Figure 1 will be used for the purposes of illustrating the operation of embodiments of the invention, it will be understood that embodiments of the invention may be applied to alternative keypad configurations of limited size keypads used for mobile terminal devices such as wireless communication devices including for example mobile telephones, PDAs and the like. In the context of the invention the term character sequence refers to one or more characters, the characters being a symbol, sign, space, letter, or number. The mode of interpretation refers to how the terminal device interprets the key press events in the form of characters.

It will also be appreciated that in other embodiments of the invention the keypad may be provided in the form of a virtual keypad displayed on a touch sensitive screen. The keys of the virtual pad being selected by applying pressure to an area of screen where the key associated with the intended character input is displayed.

A first embodiment of a method of the invention will now be described with reference to Figures 1 to 3.

In this embodiment of the invention a method is applied when the intended mode of input interpretation is number interpretation input but the terminal is operating in the multitap interpretation input mode. In this case the user wishes to input the character sequence 6794 for example, and to do he firstly presses the key corresponding to the character 6, followed by the key corresponding to the character 7, followed by the key corresponding to the character 9 and finally the key corresponding to the character 4. Since the terminal is operating in the multitap mode, instead of the character sequence 6794 being displayed on the screen 200 of the terminal 1 the character sequence "mpwg" will be displayed. This is because in the multi-tap mode the character "m" will be displayed in response to the key 6 being pressed once, the character "p" will be displayed in response to the key 7 being pressed once, the character "w" will be displayed in response to the key 9 being pressed once, and the character "g" will be displayed in response to the key 4 being pressed once.

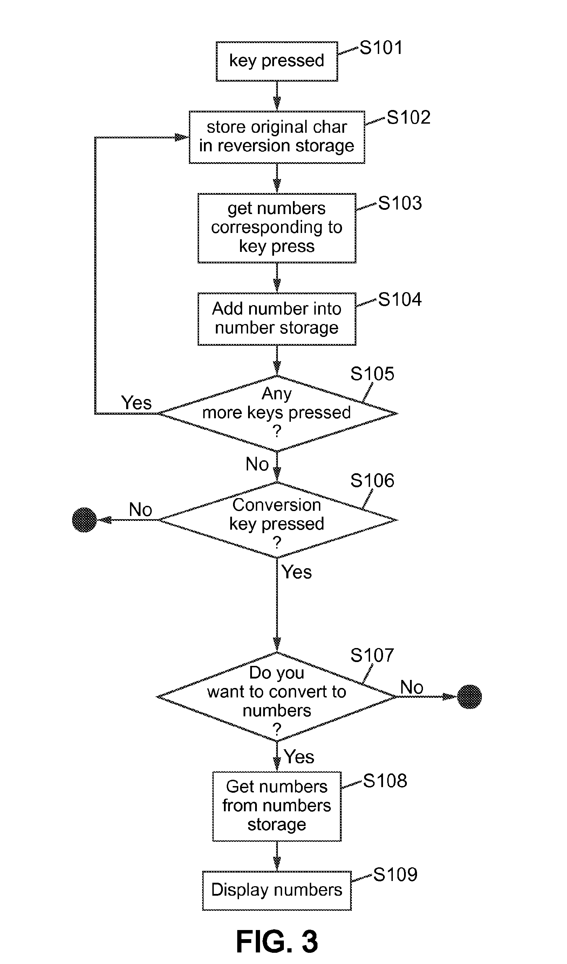

In order that the character sequence displayed may be converted to the intended character sequence the following method is implemented during input of the characters. With reference to Figure 3 in a first step S101 of the process according to the first embodiment key 6 is pressed in order for the digit 6 to be displayed. Since unbeknown to the user, the terminal is operating in multi-tap mode the character "m" is displayed instead of the character 6. In an optional step S102 the original character "m" is stored in reversion memory 310 for later retrieval if required. In step S103 the number corresponding to the key pressed is determined by processor 330. In this case the number is 6 since the key corresponding to digit 6 was pressed. In step S104 this number 6 is stored in the conversion memory 320. In step S105 it is determined if another key press event is performed i.e. is another key pressed or is the same key pressed again. In the exemplary case another key, the key 7 is pressed once and thus the method returns to step S102. Since the terminal is operating in the multi-tap mode the letter "p" which corresponds to a single click of key 7 is displayed and character "p" is stored in reversion memory 310 in step S102; The number 7 corresponding to the key pressed is determined in step S103 and stored in the conversion storage memory 320 in step S104. Steps S102 to S105 of the process are repeated until after key 4 has been pressed, according to the intention to display number 4, and no further keys are pressed - i.e. no further key press events take place.

In step S106 the processor determines if the magic key has been pressed. The magic key corresponds to the key of keypad 100 used to change between operating modes or to perform of a conversion of the character sequence which in this case is the key *. The current operating input interpretation mode is verified and determined in this case to be the multitap mode. In step S107 it is determined that the user wishes to convert the character sequence obtained in the multitap input interpretation mode which in this case is "mpwg" to the intended character sequence of the number input interpretation mode. In step S108 the numeral characters which were stored in the conversion memory 320 at each iteration of step S104 are retrieved from storage in step S107 and displayed on screen 200 in the order in which they were stored. Thus the intended character sequence of "6794" is displayed. If the user wishes to revert to the initial character sequence of "mpwg" he may opt to do so. By virtue of the original characters being stored in the memory in step S102 the initial character sequence "mpwg" can be displayed. The user may toggle between the two sequences if he so wishes. The user can thus retrieve his intended text input without having to type out the full message again.

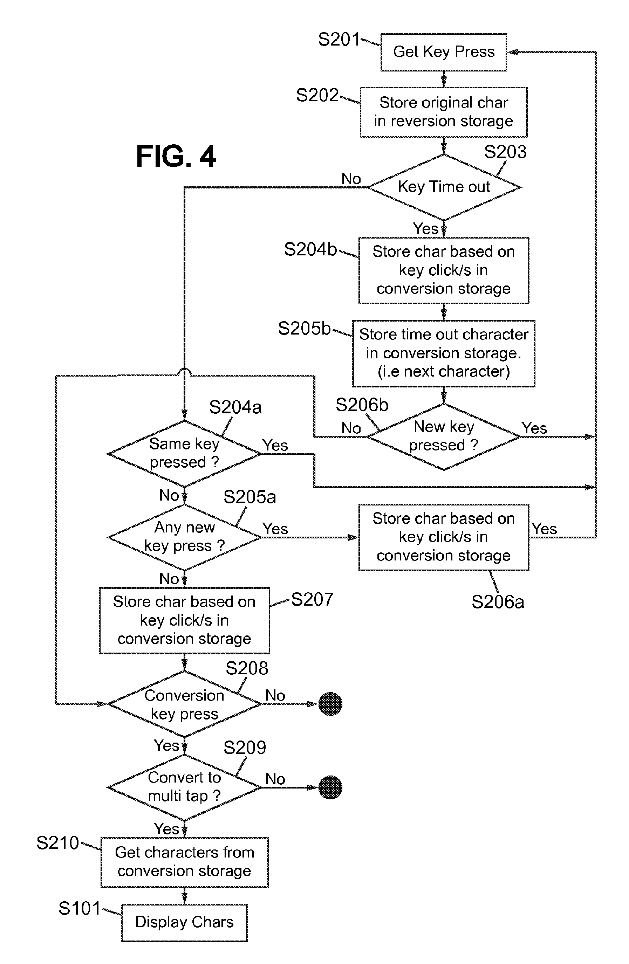

A second embodiment of the invention will now be described with reference to Figure 4. In this embodiment of the invention the method is applied when the intended mode of input interpretation is multi-tap interpretation input mode but the terminal is operating in the number interpretation input mode. In this case for example the user wishes to input the character sequence "Hi Jo" and to do so he firstly presses the key corresponding to the characters GHI (i.e. key 4) twice in quick succession in order to input the character "H", he then pauses in order for the key time out delay to expire before pressing the same key 4 again three times in quick succession in order to obtain the character "i". Without having to wait for a time delay he then clicks once on the appropriate key for obtaining a space character, which for this particular keypad is the key corresponding to the number "0" and again without having to wait for a time delay he then clicks once on the key corresponding to the characters 5 and JKL to input the character J. He then clicks three times in quick succession on the key corresponding to the characters 6 and MNO to input the character O.

Since the terminal is operating in the number mode instead of the multitap mode the number sequence "4444405666" is displayed on the screen 200 of the terminal 1 instead of the intended character sequence "hi jo" since key 4 is firstly pressed twice with the intention of inputting "h", then three times with the intention of inputting "i" and then after pressing key 0 to obtain a space, key 5 is pressed once and key 6 is pressed three times in order to input "jo". The character sequence 44444405666 corresponds to the interpretation of the key press events according to the number interpretation input mode.

In order that the character sequence displayed may be converted to the intended character sequence the following method is implemented during input of the characters. With reference to Figure 4 in a first step S201 of the process according to the second embodiment the key pressed is identified, in the present case the first key pressed being the key corresponding to the number 4. In step S202 the character 4 is thus stored in a reversion storage memory 310. In step S203 the step of checking if a key time out has occurred is performed, i.e. has the required time delay expired to enable the same key to be pressed twice for consecutive characters, or depending on the type of keypad, has a particular dedicated timeout key indicating a timeout been pressed? The dedicated timeout key may be fixed, for example is in some keypad models it may be the "_" key or the dedicated time out key may be specified by the user. If the key time out has not expired nor a time out key been pressed the process flows through the NO branch. In step S204a it is determined if the same key, i.e. key 4 has been pressed again. In this case key 4 is pressed again so the process returns to step S201 where the key press is noted. Character 4 is then stored in reversion storage in step S202. Since the user pauses after the second click of key 4 in order to be able to use key 4 again and thus the key time out expires, the process thus proceeds to step S204b where the character based on two consecutive clicks of key four (character "H") is stored in conversion storage memory 320. In step S205b a character indicating time out may be stored in conversion storage

In step S206b it is checked to see if a further key press event takes place. In this case, key 4 is pressed again for the intentional input of letter "I". The key clicked is noted in step S201, stored in step S202 and key time out is checked in step S203. No key time out occurs because the user presses key 4 again with the intention of obtaining I on three consecutive clicks of key 4. In step S204a it is determined that the same key is pressed again and the process returns to step S201 where key 4 is identified. Key 4 is stored in the memory in step S202. The key time out does not expire since key 4 is pressed again. It is thus determined in step S204a that the same key is pressed again, and the process returns to step S201 where key 4 is again identified and subsequently stored in step S202. There is no key time out because the user goes on to click on key 0 without pausing in order to obtain a space so the process returns to step S204a where it is determined that the same key has not been pressed. In step S205a a check is performed to determine if a new case has been pressed. In this key 0 is identified as a new key. In step S206a the character based on three consecutive clicks of key 4, before pressing key 0, is stored in conversion storage - i.e. the character "I" is stored. The method returns to step S201 where the key pressed (key 0) is identified, and then stored in step S202. No key time out is detected in step S203 since the user goes on to click key 5 for obtaining J. The method thus proceeds to step S204a where it is determined that the same key has not been pressed and then to step S205a where it is determined that a new key has been pressed. In step S206a the character based on one click of key 0, i.e. a SPACE is stored in conversion storage. The method returns to S201 where the key 5 is obtained and subsequently stored in step S202. In step S203 it is determined that there is no time out since the user goes on to press key 6. The method thus proceeds to step S204a where it is determined that the same key has not been pressed and then to step S205a where it is determined that a new key has been pressed. In step S206a the character based on one click of key 5, i.e. the letter J is stored in conversion storage. The method returns to S201 and the process continues until after three presses of key 6 when a time out is detected in step S203 since no further keys are pressed. The process thus continues to step S204b where the character O corresponding to three successive clicks of the key 6 is stored in conversion storage. In step S205b a character indicating timeout may be stored in conversion storage. In step S206b a check is performed to determine if a new key has been pressed. In this case since no further keys are pressed the process proceeds through branch NO to step S207 to detect if the magic key is pressed. If yes it is determined in step S208 if the user wishes to convert the displayed character sequence to the intended character sequence which would have been obtained if the terminal had been operating in the multitap mode. In the present case the displayed character sequence corresponding to the interpretation of the sequence of key presses 44444405666 according to a number input interpretation mode. If the user indicates that he wishes to convert the displayed character sequence to his intended character sequence the characters "HI JO" are retrieved from the storage in step S209 and displayed on the terminal screen in step S210. By virtue of the original numerical characters being stored in the memory in step S202 the character sequence "4444405666" according to the number input interpretation mode can be displayed. The user may toggle between the two sequences if he so wishes.

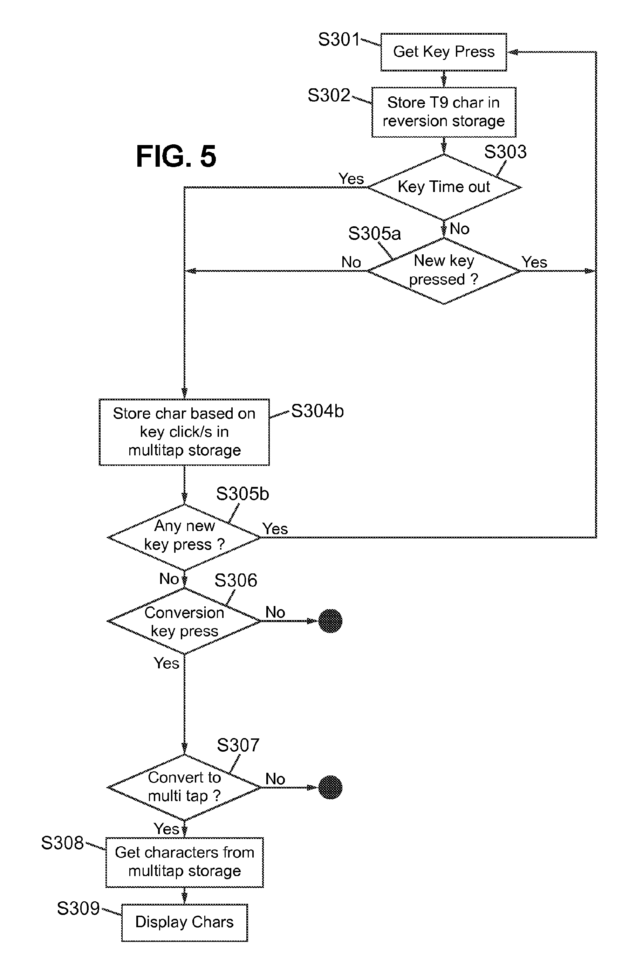

A third embodiment of the invention will now be described with reference to Figure 5. In this embodiment of the invention the method is applied when the intended mode of input interpretation is multi-tap interpretation input mode but the terminal is instead operating in a predictive interpretation input mode. In this case for example the user wishes to input the character sequence "HIT" and to do he firstly presses the key corresponding to the characters GHI (i.e. key 4) twice in quick succession in order to input the character "H", he then pauses in order for the key time out delay to expire before pressing the same key 4 again three times in quick succession in order to obtain the character "i". Without having to wait for a time delay he then clicks once on the key corresponding to the characters TUV (i.e. key 8) to obtain character t.

Since the terminal is operating in the predictive interpretation mode instead of the multitap interpretation mode a character sequence, according to the predictive dictionary used will be displayed on the screen 200 of the terminal 1 instead of the intended character sequence "HIT". For example, according to one predictive text dictionary, "Gighu" may be displayed for the input key sequence pattern "44Pause4448". When key 4 is firstly pressed an 'I' is displayed, when the key 4 is pressed for the second time the character combination 'II' is displayed, on the third click of key 4 after the pause the character combination 'Iii' is displayed, on the fourth click of key 4 the word "high" is displayed. This is because high corresponds to the most likely intended word in the English dictionary corresponding to the different combinations of GHI GHI GHI GHI. When key 4 is pressed again the character combination "Highg" is displayed. When key 8 is pressed the character combination "Highgu" is displayed corresponds to the interpretation of the key press pattern "44Pause4448" according to the predictive interpretation input mode.

In order that the character sequence displayed may be converted to the intended character sequence the following method is implemented during input of the characters. With reference to Figure 5 in a first step S301 of the process according to the third embodiment the key pressed is identified. In the present case the identified key being the key corresponding to the number 4 and the letters GHI. In step S302 the character I corresponding to the predictive interpretation of the key press GHI is stored in a reversion storage memory. Step S303 involves the step of checking if a key time out has occurred, i.e. has the required time delay to enable the same key to be pressed twice for consecutive characters expired, or has a time out key been pressed? In the present example since the key GHI is pressed again without delay the method proceeds to step S305a where it is checked if a key (the same key or another key of the keypad) has been pressed. In the present example the key GHI is pressed again so the method returns to step S301 where the key press GHI is noted. In step S302 the T9 character output corresponding to consecutive clicks GHI GHI is stored in the reversion storage which in this example is the character combination "II". The key time out is checked in step S303. Since after the second click of GHI there is a pause the method proceeds then to a step S304b where the characters based on the two successive clicks of key GHI before the pause according to a multitap interpretation mode is stored - two clicks of key GHI corresponds to the multitap input of the letter H so H is stored in multitap storage. In step S205b it is checked to see if another key is pressed. In the present example the key GHI is pressed again so the method returns to step S301 where the key pressed is identified. In step S302 the predictive interpretation of three clicks of the key GHI is stored "lii". No time out occurs and a key is pressed again for the fourth time so the fourth key press is identified in step S301. In this example the fourth key pressed is again the key GHI. In step S302 the predictive interpretation of four clicks of the key GHI is determined and stored. In this case the most probable intended character combination corresponding to four clicks of the key GHI is the English word "high" so the word "high" is stored in the reversion storage memory. No key time out is determined and a new key, key GHI is pressed. The method thus again returns to step S301 where key GHI is identified. In step S302 the predictive interpretation of five clicks of the key GHI is stored, in this case "highi". Again no time out occurs and a new key, key TUV is pressed. The key pressed is noted in step S301 and the predictive interpretation of the pattern GHI GHI GHI GHI GHI TUV is stored, which is this case is the meaningless character combination "Highgu". A key time out is determined in step S303 since no further keys are pressed so the method proceeds to step S304b and stores the characters based on the keys clicks GHI GHI GHI TUV, i.e three successive clicks without pause of the key GHI which in multitap mode corresponds to the letter "I" and one click of the key "TUV" which corresponds to the letter "T". Thus in the multitap storage memory the characters "HIT" are stored for later retrieval. Since after key TUV is pressed it is determined in step S305b that no new keys are pressed the process continues to step S306 to detect if the magic key is pressed. If yes it is then determined in step S307 if the user wishes to convert the character sequence to the intended character sequence which would have been obtained if the terminal had been operating in the multitap mode. If yes the characters "HIT" are retrieved from the multitap storage in step S308 and displayed on the terminal screen in step S309. By virtue of the original predictive characters being stored in the memory in step S302 the initial character sequence "Highgu" can be displayed. The user may toggle between the two sequences if he so wishes. There is no need for the user to retype out the intended message in full again.

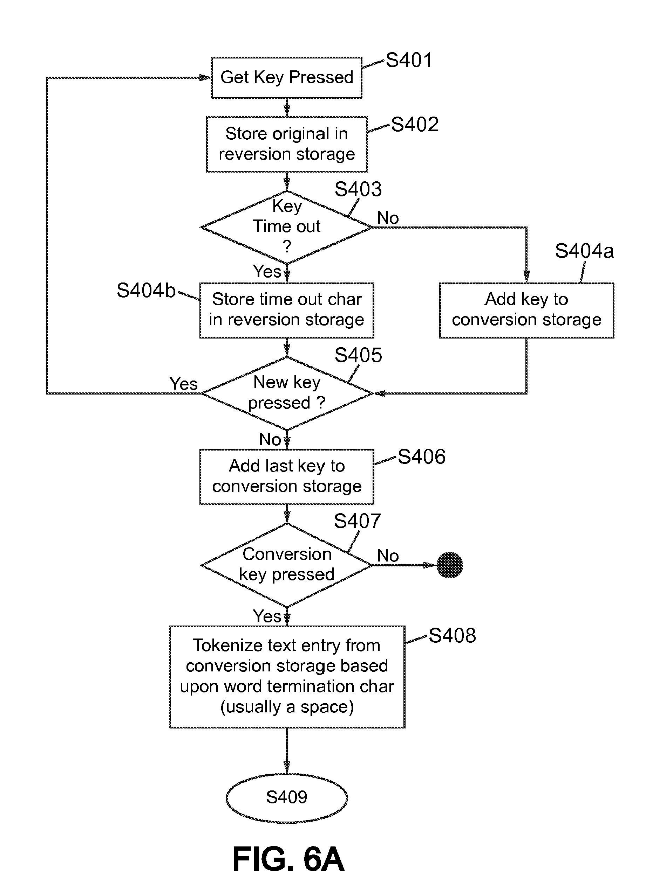

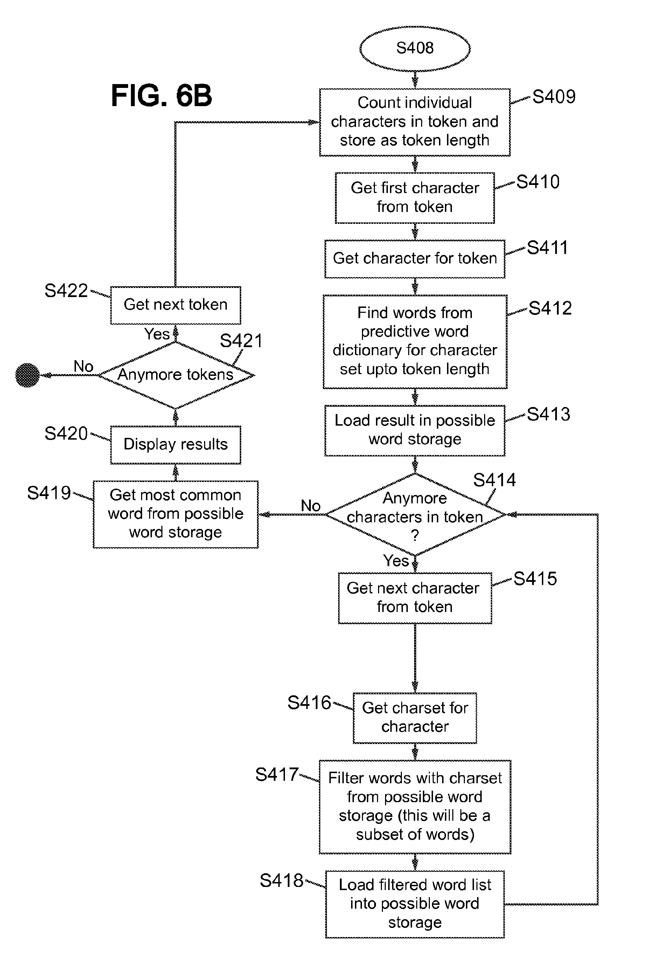

A fourth embodiment of the invention will now be described with reference to Figures 6A and 6B. In this embodiment of the invention the method is applied when the intended mode of operation is the predictive interpretation mode but the terminal is in reality operating in a multi-tap interpretation input mode.

In this case for example the user wishes to input the character sequence "HI CAT" and to do he firstly presses twice the key corresponding to the characters GHI to input the letters H and I followed by a press of key to obtain a space. He then presses the key corresponding to characters ABC (i.e. key 2) twice to input the characters "C" and "A", then key TUV once to obtain the character "T". Since the user thinks he is in predictive text mode it is unlikely that he will wait for a time out between presses of the same key when inputting H and I and when inputting C and A . Similarly key GHI will only be pressed once to obtain "I" rather than twice and key ABC will only be pressed once to obtain "C" rather than three times which would be necessary in multitap mode. What will be displayed on the screen will depend on whether there or not there are pauses between key presses which exceed the timeout period. For example, if the user presses key GHI twice in quick succession to obtain "HI", in the multitap interpretation mode this will be interpreted as character "H" and the character sequence "H" would be displayed. If there is a pause for any reason between his consecutive clicks of key GHI in the multitap mode he will obtain the character sequence "Gg" instead of "Hi".

Similarly if the user presses key ABC twice in quick succession to obtain "CA", in the multitap interpretation mode this will be interpreted as character "b" and the character sequence "bt" would be displayed instead of "cat". If there is a pause for any reason between his consecutive clicks of key ABC he will obtain the characters "Aa" and the character sequence "Aat" will be displayed instead of "cat".

In order that the character sequence displayed may be converted to the intended character sequence the following method is implemented during input of the characters. With reference to Figure 6 in a first step S401 of the process according to the fourth embodiment the key pressed is identified. In the present case the first key being the key corresponding to the letters GHI. In step S402 the key GHI is stored in the reversion storage. Alternatively the character "G" corresponding to the multitap interpretation of one press of key GHI can be stored in the reversion storage memory. Step S403 involves the step of checking if a key time out has occurred, i.e. has the required time delay to enable the same key to be pressed twice for consecutive characters expired, or has a time out key been pressed? Let us take the case where the user presses the key GHI again rapidly to obtain the character "I". Since no key time out has been detected the process follows the NO branch of the flow chart and key "GHI" is added to conversion storage in step S404a. In step S405 it is determined if a new key has been pressed, since in this case key GHI has been pressed again the process flow follows the YES branch and returns to step S401 where the new key press is identified and then stored in step S402. Alternatively in this case since key GHI has been pressed again without time delay so the character "H" corresponding to two successive clicks of key GHI in multitap mode may be stored in the reversion memory. No timeout delay is detected in step S403 before the subsequent key click so the key "GHI" is stored in conversion storage in step S404a. A new key press is detected in step S405 so the process returns to step S401 where the key pressed - key 0 for a space character - is identified and then stored in step S402. The space key is added to conversion storage in step S404a and a new key press is detected at step S405 when the ABC key is clicked and then stored in the reversion storage memory in step S402. Step S403 involves the step of checking if a key time out has occurred. Let us take the case where the user presses the key ABC again rapidly to obtain the character "A". Since no key time out has been detected the process follows the NO branch of the flow chart and key "ABC" is added to conversion storage in step S404a. In step S405 it is determined if a new key has been pressed, since in this case key ABC has been pressed again the process flow follows the YES branch and returns to step S401 where the new key press is identified and then stored in step S402. No timeout delay is detected before the subsequent key click so the key "ABC" is stored in conversion storage in step S404a. A new key press is detected in step S405 so the process returns to step S401 where the key pressed - key TUV - is identified and then stored in step S402. In this case since no further keys are pressed, in step S405 so method proceeds to step S406 where the last key pressed, in this case key TUV is added to conversion storage. In conversion storage the follow sequence of keys have been stored GHI-GHI-Space-ABC-ABC-TUV. In step S407 it is determined if the magic key for changing the input interpretation has been pressed. If yes, in step S408 the text entry from the conversion storage is tokenized. The sequence is tokenised into separate tokens or words based on the presence of a word termination character which in this case is the space. The entry is thus tokenised into a first token GHI-GHI, and a second token ABC-ABC-TUV. The first token is then analysed. In step S409 the number of individual characters in the first token is counted. The number of individual characters corresponds to the number of keys pressed i.e. two. In step S410 the first character G, H or I is obtained, and in the step S411 the character set for a token of two characters beginning with the letter GH or I is obtained. In step S412 the words from the predictive word dictionary corresponding to a two character token beginning with GHI is obtained. Possible words could be "Hi", "Go", "It" or "In", for example. In Step S413 the words are stored in possible word storage. In step S414 it is checked to see if there are any further characters in the first token. In this case since there is a further character in the token after the first character, the process proceeds to step S415 where the next character of the token in retrieved - character G, H or I. In step S416 the character set for the character combination of G, H or I and G, H or I for a two character token length is determined. In this case the word "Hi" is proposed and filtered from the possible word storage memory in step S417. The filtered word is then stored in the possible word storage in step S418. The process returns to step S414 where it is checked to see if there are any further characters in the first token. In this case there are no further characters so the process follows the NO branch to step S419 where the most common word from possible word storage memory is retrieved and displayed in step S420. In this example the character combination "Hi" is retrieved from the possible word storage and displayed. In step S421 it is checked to see if there are any further tokens and if YES the process continues to step S422 and the next token is retrieved. The next token in the present example is the token ABC ABC TUV. The process returns to step S409 where the number of individual characters in the token are counted and stored. In this case the number of individual characters is three. In step S410 the first character AB or C is obtained. The character-set for a three character token beginning with the letter A, B or C is obtained in step S411. The words from a predictive word dictionary corresponding to a three character length token beginning with the letter A B or C is obtained in step S412. The possible results are stored in word storage in step S413. Such word proposals may include ACT, ANT, ADD, AGE, BIN, BAD, BAT....CAT, CUT etc. In step S414 it is determined that the token contains further characters. The next character A, B or C is obtained in step S415 and the character set for a three character token with the first two characters being A B or C is obtained in step S416. In step S417 the words from a predictive word dictionary corresponding to the possible combinations of A B or C and A B or C with a token length of three are filtered from the word proposals previously stored in the word storage memory in step S413. In this case the character combinations CA, AC, BA and AB are deemed as possible, corresponding to potential three letter words such as CAT, CAB, ACT, BAD, BAT etc. These filtered words are then stored in the possible word storage memory in step S418. The process returns to step S414 where it is checked to see if there are any more characters in the token. In this case since there are three characters the answer is YES so the process continues to step S415 where the next character TU or V is retrieved from the token. In step S416 the character set for the third character is obtained i.e. CA, AC, BA, or AB combined with T, U or V. In step S417 a set of possible words are filtered from the proposed words stored in the word storage memory. In this exemplary case the possible filtered words may be "ACT" "CAT" or "BAT". This filtered word list is then stored in the possible word storage memory in step S418. The process then returns to step S414 to determine if there are any further characters in the second token. Since in this case there are no further characters the method proceeds to step S419. The most common word is retrieved from the storage in step S419, in this case the most common word may be determined to be "cat". It will be appreciated that in different embodiments of the invention the most common word will depend on the dictionary used, the operating language or the words used more frequently by the user. The results are displayed in step S420. Since the message contains no further tokens the process ends after step 421. It will be appreciated that a function key may be pressed to change the displayed word from the common word proposed by the terminal to a more appropriate word preferred by the user. The terminal then suggests another word on each press of the button. For example CAT may be changed to ACT or BAT. If the suggested words are not appropriate the user may then input a word using multitap mode.

It will be understood the various embodiments may be combined so that a terminal has the possibility to switch between a range of different modes of input interpretation.

By virtue of recording the sequence of key press events the methods according to the embodiments of the invention may be used to directly convert a sequence of key presses according to a key press pattern from a first character sequence corresponding to the interpretation of the key press pattern according to a first input interpretation mode into a second character sequence corresponding to the interpretation of the key press pattern according to a second input interpretation mode different to the first input interpretation mode

Although the present invention has been described hereinabove with reference to specific embodiments, the present invention is not limited to the specific embodiments, and modifications will be apparent to a skilled person in the art which lie within the scope of the present invention.

For instance, while the foregoing examples have been explained with respect to alphabetical letters, it will be understood that the invention may be applied to characters of languages not based on alphanumeric characters such as Chinese, Japanese or Korean language characters.

Moreover, while the foregoing examples have been explained with respect to the input of text for an SMS message, it will be appreciated that embodiments of the invention may be applied to the input of text for status updates on networking sites, for the composition of emails or notes, for updating a calendar and other such applications requiring the input of text to a terminal with a limited size keypad.

Furthermore, while the invention has been described with respect to the multi-tap, number or predictive text input interpretation modes, it will be appreciated that further embodiments of the invention may be applied to other text input nodes such as gesture based input modes such as, for example, writing characters on a touch sensitive screen with a stylus or a finger

It will also be appreciated that in alternative embodiments of the invention instead of pressing a key to perform the conversion the conversion process may be initiated by other means such as for example the detection of non-sensical text.

The method according to embodiments of the invention may also be used to convert a text input interpreted according to one language predictive mode to a second language predictive mode by storing the sequence of key presses and analysing the tokens with reference to a dictionary of a different language of choice. For example the user may input a message in a predictive mode thinking he is in a French language mode when the terminal is instead operating in an English language mode and instead of "Bonjour", the character sequence "Bookmus" may be displayed. By employing a conversion mode the intended word Bonjour may be displayed.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A method of converting a character sequence input of text, the character sequence being input by means of a keypad to a terminal operating in a first input interpretation mode, the method comprising:
inputting a first character sequence by pressing one or more keys of the keypad according to a key press pattern, the key press pattern comprising one or more key press events for obtaining a character sequence;
analysing said key press pattern to determine a second character sequence corresponding to the interpretation of said key press pattern according to a second input interpretation mode different to the first input interpretation mode; and displaying the second character sequence.

2. A method according to claim 1 wherein analysing the key press pattern comprises the step of determining if a key pressed is different to an immediate preceding key pressed, and if it is determined that the key pressed is different to the immediate preceding key pressed, storing a character corresponding to the number of consecutive presses of the preceding key according to a multi-tap interpretation mode.

3. A method according to claim 1 or 2 wherein analysing the key press pattern comprises the step of determining if a predetermined time delay has expired, or if a timeout key has been pressed, between two consecutive press events in which the same key is pressed twice, the time out key indicating that the same key has been pressed the required number of times consecutively to obtain the desired character; and if it is determined that the predetermined time delay has expired or that the time out key has been pressed between said two consecutive press events, the method further comprising storing the character corresponding to the number of times the key was pressed before the expiry of the time delay or before the pressing of the time out key according to a multi-tap interpretation mode.

4. A method according to any one of the preceding claims further comprising identifying and storing identification of the sequence of keys pressed forming an input character sequence, splitting the input character sequence into one or more word tokens, counting the number of characters in each word token, each character corresponding to a key press, finding words in a predictive word dictionary corresponding to the possible characters forming the word token and to the word length.

5. A text conversion module for converting a character sequence input of text, the character sequence being input by means of a keypad to a terminal operating in a first input interpretation mode, the module comprising:
a memory for storing a key press pattern, the key press pattern comprising one or more key press events for inputting a character sequence via the keypad;
a processor for analysing said key press pattern to determine a second character sequence corresponding to the interpretation of said key press pattern according to a second input interpretation mode different to the first input interpretation mode.

6. A module according to claim 5 wherein the first input interpretation mode is selected from the following group: number input mode, multitap input mode and predictive input mode, the second input mode being different to the first input mode and selected from the following group: number input mode, multitap input mode and predictive input mode.

7. A module according to claim 5 or 6, wherein the processor is configured to identify the key pressed and the memory is operable to store the character corresponding to the key pressed according to the second input interpretation mode.

8. A module according to any one of claims 5 to 7 wherein the processor is configured to determine the number of times the same key has been pressed consecutively and to determine the character corresponding to the number of consecutive key presses of the same key according to a multitap interpretation mode.

9. A module according to any one of claims 5 to 8, wherein the processor is configured to determine if a key pressed is different to the immediately preceding key pressed, and if it is determined that the key pressed is different to the immediately preceding key pressed, the memory is operable to record a character corresponding to the number of consecutive presses of the preceding key according to a multi-tap interpretation mode.

10. A module according to any one of claims 5 to 9 wherein the processor is configured to determine if a predetermined time delay has expired or if a time out key has been pressed, between two consecutive press events in which the same key is pressed twice.

11. A module according to claim 10 wherein if it is determined that a predetermined time delay has expired or a time out key has been pressed between two consecutive press events in which the same key is pressed twice, the processor is configured to determine a character corresponding to the number of clicks of the said same key, before expiration of the predetermined time delay or pressing of the timeout key, and according to a multitap interpretation input mode.

12. A module according to any one of claims 5 to 11 wherein the processor is configured to split the input character sequence into one or more word tokens according to the presence of a character indicating termination of a word, to count the number of characters in each word token, and to find one or words in a predictive word dictionary corresponding to the possible characters forming each word token and to the length of the corresponding word token.

13. A module according to any one of claims 5 to 12 wherein the memory is further configured to store each character of the character sequence according to the first input interpretation mode so that the first character sequence may be retrieved.

14. A computer-readable medium having computer-executable instructions which when loaded into a data processing device enable the data processing device to perform the method of any one of claims 1 to 4.

15. A terminal comprising:
a keypad for inputting a character sequence;
a conversion module according to any one of claims 5 to 13, for converting the character sequence input by means of the keypad to the terminal operating in a first input interpretation mode; and a
a display for displaying the converted character sequence.
